# EUROPEAN PATENT SPECIFICATION

(11) **EP 3 595 484 B1**
(45) Date of publication and mention of the grant of the patent: **02.02.2022**
(21) Application number: 18767063.3
(22) Date of filing: 15.03.2018
(51) Int. Cl.: A45C 5/14, B60B 33/00

(54) **CASTER ASSEMBLY FOR A LUGGAGE CASE**
ROLLENANORDNUNG FÜR EIN GEPÄCKGEHÄUSE
ENSEMBLE ROULETTE POUR VALISE

(30) Priority: 16.03.2017 SE 1750312
(43) Date of publication of application: 22.01.2020
(73) Proprietor: Scandinavian Travel Innovation AB, 436 57 Hovås (SE)
(72) Inventor: KRUEGER, James, 439 34 Onsala (SE); GROU, Robert, 418 77 Göteborg (SE)
(74) Representative: Zacco Sweden AB
(86) International application number: PCT/SE2018/050255
(87) International publication number: WO 2018/169478

(56) References cited:
- WO-A1-2014/117305
- GB-A- 1 407 025
- US-A- 4 026 570
- US-A- 4 332 052
- US-A- 4 422 212
- US-A- 5 365 635
- US-A1- 2004 163 208

## Description

### Technical Field

The present invention concerns an assembly for securing luggage case casters, skis, and other transportation aids of a luggage case acting against a ground.

An adapter is formed of a separate holder and has coupling means. Said coupling means is/are co-operatable with supplementary coupling element/elements situated on a caster holder for a caster housing or another holder for another transportation aid. The adapter is arranged receivable in and/or is connectable with a separate or integrated corner bottom part of the luggage case in question, said adapter being arranged interlockable and connectable with surrounding caster holder/holder as well as corner bottom part.

### Technical Background

Fastening and securing of, e.g., casters of suitcases, is provided using varying fastening parts having fitting sizes for intended casters, etc., and luggage cases. Thus, numerous parts are required to get the casters, etc., to fit to the correct luggage case and with the correct desired sizes of the same. Particularly in vacuum forming of luggage cases manufactured from plastic material, there are problems to provide means for securing to the proper shell of the luggage cases in vacuum forming. This is however facilitated in injection moulding of luggage cases.

"US 4,422,212", "US 4,332,052", "US 5,365,635", "GB 1407025 A", "US 4,026,570", "US 20040163208" and "WO 2014117305" are different examples of fastening devices according to prior art to fasten casters to suitcases.

WO 2014/117305 A1 relates to an assembly according to the preamble of claim 1.

### Summary of the Invention

Therefore, the main object of the present invention is primarily to solve said problems to be able to, by few parts, fasten casters, etc., to manufactured luggage cases so that the means therefor can be used in any one of the luggage cases desired, but also in luggage cases manufactured by vacuum forming. Another object is also to provide a robust fixing where it is relatively easy to replace casters or another transportation aid.

Said object is achieved by the present invention by providing an assembly for securing luggage case casters, skis, and other transportation aids of a suitcase acting against a ground according to claim 1. Preferred features of the invention are set out in the dependent claims.

The fact that the screws fasten the caster housing from the interior of the luggage case means that they are protected from tampering in ordinary use of the luggage case and accordingly allows a reliable fixing. Furthermore, the solution of pegs and cylindrical feet means, among other things, that the fixing will be robust.

Preferably, the adapter and the caster holder/holder have paired, essentially parallel grooves at mutual distances from each other.

According to a preferred variant of the invention, the grooves are male-shaped and female-shaped, respectively, on common part (the holder and the caster housing, respectively).

According to a further variant of the invention, the caster housing that is provided with female-shaped grooves and the caster housing that is provided with male-shaped grooves, respectively, also has transverse female-shaped and male-shaped, respectively, end groove in the two parts, which transverse end grooves are co-operatable with each other when the parts are in entirely inserted position.

Furthermore, the adapter is preferably receivable with the main part thereof in a congruent recess of the corner bottom part.

The corner bottom part is preferably formed of a separate part or consists of an integrated corner part of a luggage case in question.

According to a further variant of the invention, the openings are situated at mutual distances from each other, along the circumference of the corner bottom part and of the adapter, respectively.

Preferably, the parts of the assembly consist of plastic material, such as polypropylene, ABS, and/or nylon.

Suitably, the corner bottom part has a border which extends along approximately half the circumference portion of the corner bottom part.

According to a preferred variant, the border extends in an arched manner along the corner bottom part on elevated level from the primarily flat reception portion of the same as well as from a lower level at the respective end portions of the body.

### Brief Description of Figures

The invention is described below in the form of a preferred embodiment example, reference being made to the accompanying drawings, in which
Fig. 1 shows in perspective obliquely from above a caster housing having holder received thereon,

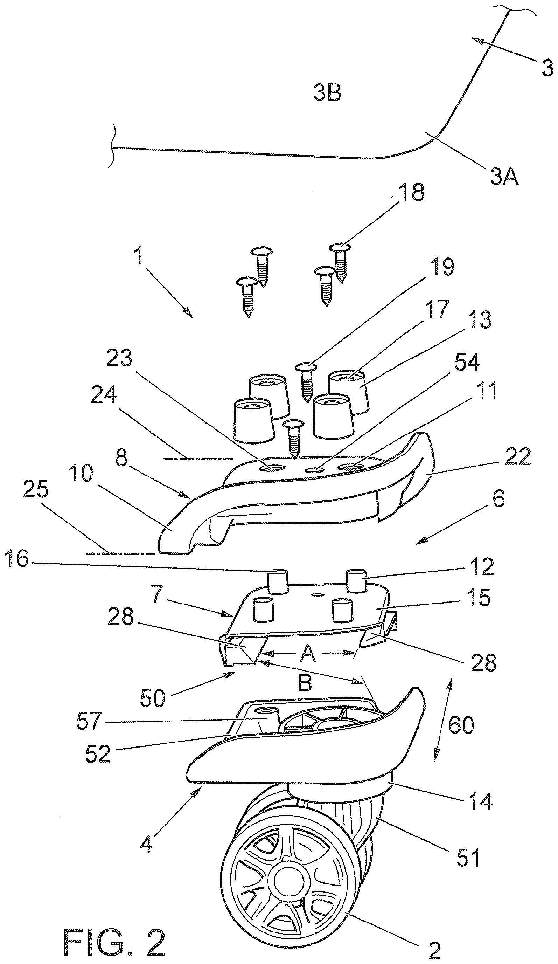

Fig. 2 shows an exploded view of the assembly,

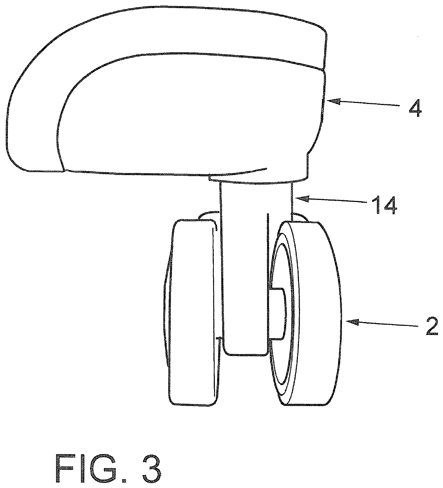

Fig. 3 shows a side view of the caster housing with luggage case feet separately shown,
Fig. 4 shows parts included in the assembly in extended position,
Fig. 5 shows the parts in position prepared for assembling,
Fig. 6 shows the parts as seen from the under side, and
Fig. 7 shows in perspective obliquely from below an exploded view of the assembly.

### Detailed Description of Examples of Embodiments

An assembly 1 for the securing of casters 2, skis, runners, and other suitable and possible transportation aids acting against a ground comprises an adapter 6 which is formed of a separate part 7 and which has one or more coupling means 50. Said coupling means 50 is/are arranged co-operatable with one or more supplementary coupling element/elements 52 situated on a caster holder 51 for a caster housing 4 or another holder for another transportation aid.

A caster housing 4 arranged on a suitcase 3 comprises a rotatable mounting 14 intended for said luggage case casters 2. An adapter 6 is formed of an intermediate holder 7 which is situated between a said caster housing 4 and a suitcase 3 and which is interlockable with a corner bottom part 8. A said adapter 6 is arranged to allow to be used for the interlocking of identical caster housings 4, etc., intended for different luggage case types, and/or luggage case sizes, or on suitcases 3 manufactured by vacuum forming.

Said corner bottom part 8 is shape-adapted to the integrated corner part 3A of an intended luggage case and which has at least one arc-shaped end portion, preferably two arc-shaped end portions 9, 10. The corner bottom part 8 has a plurality of recesses/openings 11 on the respective upper and under side 8A, 8B thereof and which are shape-adapted for the receipt of upwardly projecting pegs 12 of the holder 7 and cylindrical feet 13 receivable between the luggage case 3 and the corner bottom part 8 for the bolting of the assembly by fixing screw 18, respectively.

Said recesses/openings 11 are situated at mutual distances from each other, along the circumference and upper part 15 of the corner bottom part 8 and of the holder 7, respectively, and the pegs 12 as well as the feet 13 have screw holes 16, 17 for the receipt of the fixing screws 18 for said feet 13 and pegs 12.

Furthermore, the corner bottom part 8 is arranged to be boltable to said holder 7 by means of separate screws 19, which are received in holes 54, 55 in the corner bottom part 8 and in the holder 7, respectively.

Said corner bottom part 8 has at the top a border 22 which extends along approximately half the circumference portion of the body for the co-operation with the corner 3A of a said interlockable luggage case 3. This border 22 extends in an arched manner along the corner bottom part 8 on elevated level 24 from the principal flat reception portion 23 of the same as well as from a lower level 25 at the respective end portions 9, 10 of the body.

Depending on the size of the luggage case 3 that is intended to be provided with casters 2 of standard size and intended kind, an assembly 1 according to the present can be utilized by the fact that the adapter 6 thereof can be interlocked with an intended corner bottom part 8 of correct size to fit the luggage case 3 to the same, between the luggage case 3 and the holder 7. Thereby, caster housings 4 of one and the same kind and size can be utilized for several different sizes of luggage cases and for luggage cases of different types. The holder 7, which is arranged to be placed between caster housing 4 and intended corner bottom part 8, is arranged to fit to be possible to be interlocked with desired suitable mating corner bottom part 8.

In desired mating positions, the parts are interlocked by the intended screws being arranged to screw together the above-mentioned parts with each other in order of priority as counted from below.

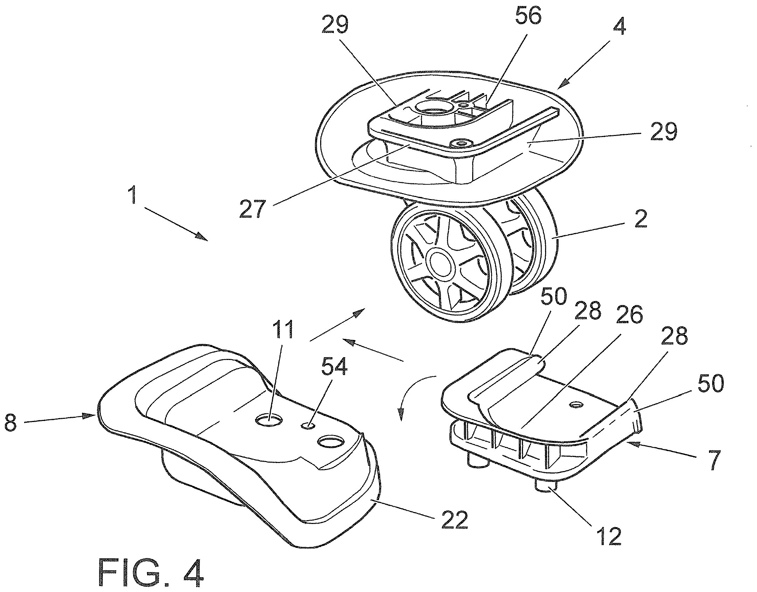

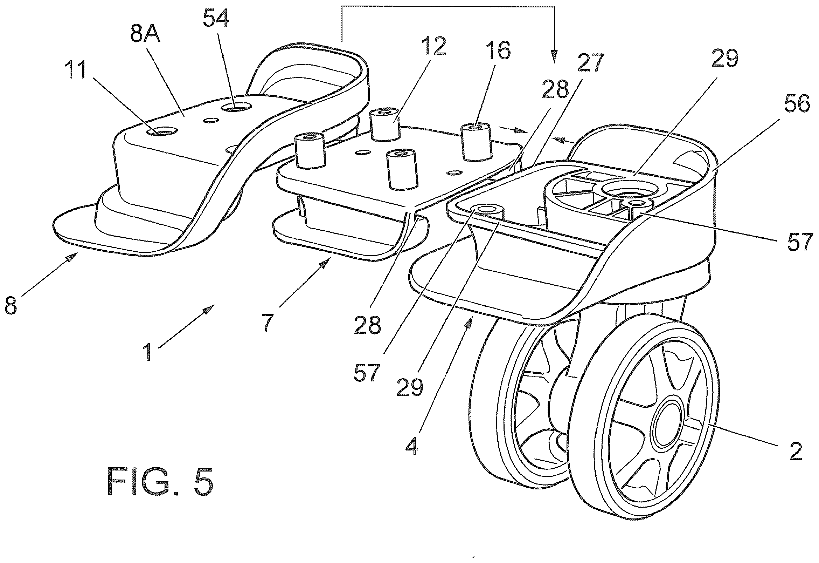

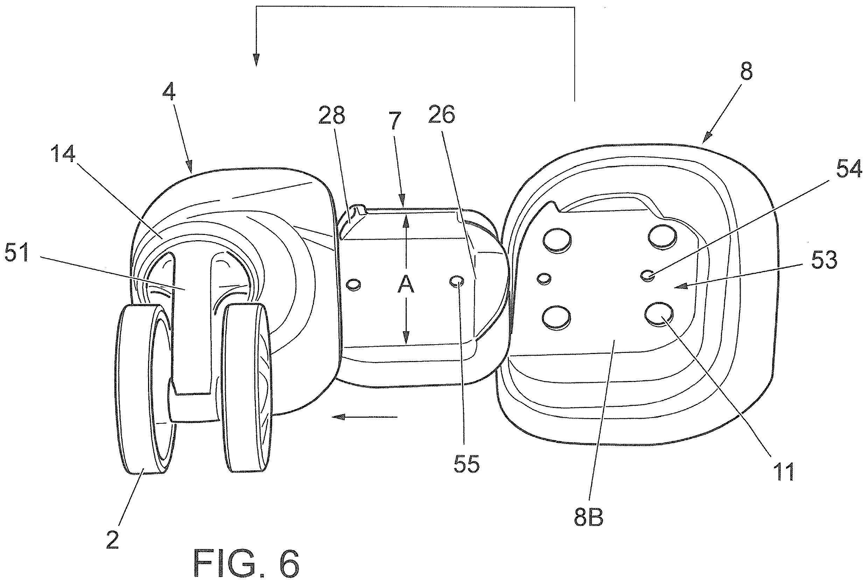

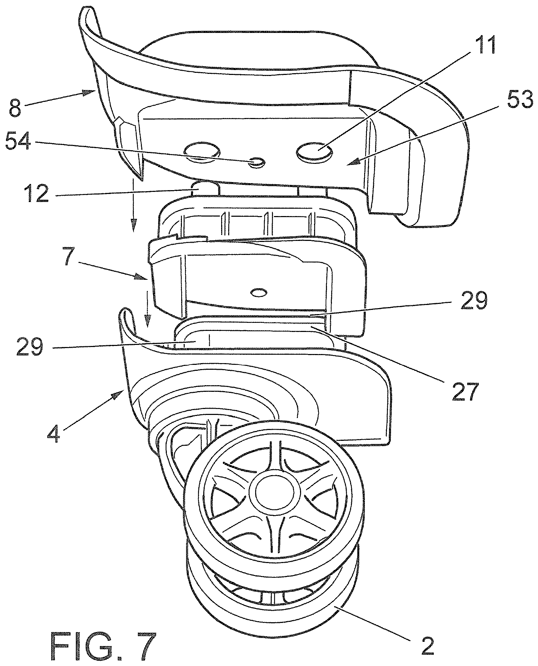

As is clearly seen in Figs. 4-7, the holder 7 with the paired coupling means 50 thereof is arranged to be possible to be interlocked with the supplementary coupling elements 52 likewise arranged in pairs, which are arranged on a caster housing 4 or on another holder for another suitable transportation aid, e.g. skis or runners if the luggage case is desired to be provided with such ones for pulling purpose, by being possible to be displaced in relation to each other in the longitudinal direction 60 of the coupling means. Coupling means 50 and coupling elements 52 are preferably formed of paired, essentially parallel grooves 29, 28 at mutual distances A, B from each other, which are male-shaped and female-shaped, respectively, on common part.

Furthermore, the adapter 6 is arranged receivable in and/or connectable with a separate or integrated corner bottom part 8 for a luggage case 3 in question. In doing so, said adapter 6 is arranged interlockable and connectable with surrounding caster holder 51 as well as corner bottom part 8.

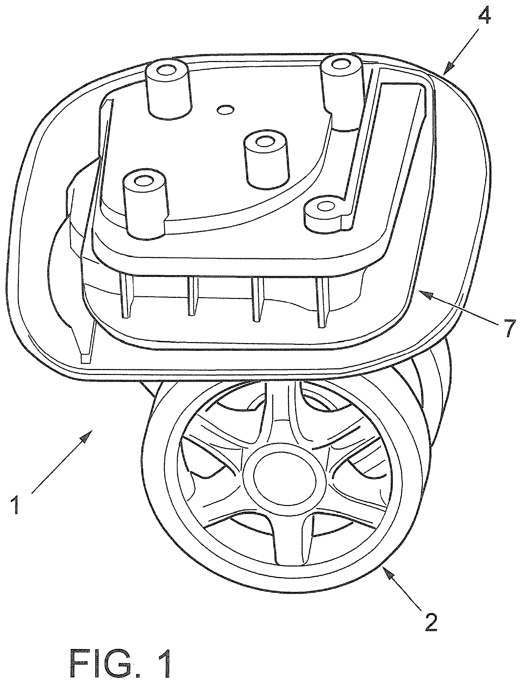

In addition, the part that is provided with female-shaped grooves and the part that is provided with male-shaped grooves, respectively, also has transverse female-shaped and transverse male-shaped, respectively, end grooves 26, 27 in the two parts. These transverse end grooves are co-operatable with each other when caster housing 4 and the holder 7 are in entirely inserted position, as is shown in Fig. 1.

Furthermore, the adapter 6 has a plurality of pegs 12 projecting perpendicularly from the upper part 15 of the holder 7, which pegs 12 are receivable in mating recesses 11 of the corner part 8 and which pegs 12 form receivers for fixing screws 18 in assembled parts.

The adapter 6 is in that connection receivable in a congruent recess 53 of the corner bottom part 8, which in turn is formed of a separate part or which consists of an integrated corner part 3A of a luggage case 3 in question. Said corner bottom part 8 has through openings 11 for the receipt of the pegs 12 of the adapter 6. Cylindrical feet 13 are arranged to surround the pegs 13 from the interior 3B of the luggage case and be fastened by through screw 18 in the adapter 6. Said openings 11 are situated at mutual distances from each other along the circumference of the corner bottom part 8 and of the adapter 6, respectively.

The caster housing 4 is arranged to be fastened to the assembly 1 by a screw 19 from the interior 3B of the luggage case via through reception holes 54, 55 in the corner bottom part 8 and in the adapter 6 as well as in a screw reception hole 56 in a socket 57 of the caster housing 4.

Preferably, the caster housing 4, the holder 7, and the corner bottom part 8 of the assembly 1 consist of plastic materials of a suitable kind, such as polypropylene, ABS, and/or nylon.

The corner bottom part 8 has a border 22, which extends approximately along half the circumference portion of the corner bottom part and this border 22 extends in an arched manner on elevated level from the primarily flat reception portion 23 of the same as well as from a lower level 25 at the respective end portions 9, 10 of the body.

The function and nature of the invention should have been clearly understood from the above-mentioned and also with knowledge of what is shown in the drawings but the invention is naturally not limited to the embodiments described above and shown in the accompanying drawings. Modifications are feasible, particularly as for the nature of the different parts, or by using an equivalent technique, without departing from the protection area of the invention, such as it is defined in the claims.

The arrows in the drawings show how the different parts are assembled by being displaced in relation to each other as well as being lowered down toward each other.

## Claims

1. Assembly (1) for securing luggage case casters (2), skis, and other transportation aids of a luggage case (3) acting against a ground, wherein said assembly (1) comprises:
an adapter (6) being formed of a separate holder (7), wherein said adapter (6) has coupling means (50), wherein said coupling means (50) are co-operatable with supplementary coupling elements (52) situated on a caster holder (51) for a caster housing (4) or another holder for another transportation aid; and
a separate or integrated corner bottom part (8) of said luggage case (3), wherein the adapter (6) is arranged receivable in and/or is connectable with said corner bottom part (8), wherein
the adapter (6) has a plurality of pegs (12) projecting perpendicularly from the upper part (15) thereof, which are receivable in openings (11) of the corner bottom part (8) and which pegs (12) form receivers for fixing screws (18), and
the corner bottom part (8) further has cylindrical feet (13) being arranged to surround the pegs (12) from the interior (3B) of the luggage case and be fastened by fixing screws (18) in the adapter (6),
**characterized in that** the caster housing (4) is arranged to be fastened to the assembly (1) by a screw (19) from the interior (3B) of the luggage case (3) via through reception holes (54, 55) in the corner bottom part (8) and the adapter (6) as well as via a screw reception hole (56) in a socket (57) of the caster housing (4).

2. Assembly (1) according to claim 1, wherein the coupling means (50) of the adapter (6) and the coupling elements (52) of the caster holder (51) are formed as paired, essentially parallel grooves (28, 29) at mutual distances (A, B) from each other.

3. Assembly (1) according to claim 1, wherein the adapter (6) is receivable with the main part thereof in a congruent recess (53) of the corner bottom part (8).

4. Assembly (1) according to any one of the above claims, wherein the corner bottom part (8) is formed of a separate part or consists of an integrated corner part (3A) of said luggage case (3).

5. Assembly (1) according to claim 1, wherein the openings (11) are situated at mutual distances from each other, along the circumference of the corner bottom part (8) and of the adapter (6), respectively.

6. Assembly (1) according to any one of the above claims, wherein the caster housing (4), the holder (7), and the corner bottom part (8) of the assembly (1) consist of plastic material, such as polypropylene, ABS, and/or nylon.

7. Assembly (1) according to any one of the above claims, wherein the corner bottom part (8) has a border (22) which extends along approximately half the circumference portion of the corner bottom part (8).

8. Assembly (1) according to claim 7, wherein the border (22) extends in an arched manner along the corner bottom part (8) on elevated level from a primarily flat reception portion (23) of the same as well as from a lower level (25) at respective end portions (9, 10) of the corner bottom part (8).

## Patentansprüche

1. Anordnung (1) zum Sichern von Gepäckkofferrollen (2), Skiern und anderen Transporthilfen eines auf einen Boden wirkenden Gepäckkoffers (3), wobei die Anordnung (1) umfasst:
einen Adapter (6), der aus einem separaten Halter (7) ausgebildet ist, wobei der Adapter (6) Kopplungsmittel (50) aufweist, wobei die Kopplungsmittel (50) mit zusätzlichen Kopplungselementen (52) zusammenwirken können, die sich an einem Rollenhalter (51) für ein Rollengehäuse (4) oder einem anderen Halter für eine andere Transporthilfe befinden; und
ein separater oder integrierter Eckbodenteil (8) des Gepäckkoffers (3), wobei der Adapter (6) in dem Eckbodenteil (8) aufnehmbar angeordnet und/oder mit diesem verbindbar ist,
wobei der Adapter (6) mehrere senkrecht von dessen Oberteil (15) abstehende Zapfen (12) aufweist, die in Öffnungen (11) des Eckbodenteils (8) aufnehmbar sind und welche Zapfen (12) Aufnahmen für Befestigungsschrauben (18) ausbilden, und
wobei der Eckbodenteil (8) ferner zylindrische Füße (13) aufweist, die angeordnet sind, um die Zapfen (12) von dem Innenraum (3B) des Gepäckkoffers zu umgeben und durch Befestigungsschrauben (18) in dem Adapter (6) befestigt zu werden,
**dadurch gekennzeichnet, dass**
das Rollengehäuse (4) angeordnet ist, um an der Anordnung (1) befestigt zu werden, mittels einer Schraube (19) aus dem Innenraum (3B) des Gepäckkoffers (3) durch Aufnahmelöcher (54, 55) im Eckbodenteil (8) und dem Adapter (6), sowie über ein Schraubenaufnahmeloch (56) in einer Aufnahme (57) des Gepäckkoffers (4).

2. Anordnung (1) nach Anspruch 1, wobei die Kopplungsmittel (50) des Adapters (6) und die Kopplungselemente (52) des Rollenhalters (51) als gepaarte, im wesentlichen parallele Nuten (28, 29) in gegenseitigen Abständen (A, B) voneinander ausgebildet sind.

3. Anordnung (1) nach Anspruch 1, wobei der Adapter (6) mit seinem Hauptteil in einer kongruenten Ausnehmung (53) des Eckbodenteils (8) aufnehmbar ist.

4. Anordnung (1) nach einem der vorhergehenden Ansprüche, wobei der Eckbodenteil (8) aus einem separaten Teil ausgebildet ist oder aus einem integrierten Eckteil (3A) des Gepäckkoffers (3) besteht.

5. Anordnung (1) nach Anspruch 1, wobei die Öffnungen (11) sich in gegenseitigen Abständen voneinander entlang des Umfangs des Eckbodenteils (8) bzw. des Adapters (6) befinden.

6. Anordnung (1) nach einem der vorstehenden Ansprüche, wobei das Rollengehäuse (4), der Halter (7) und der Eckbodenteil (8) der Anordnung (1) aus einem Kunststoffmaterial, wie Polypropylen, ABS und/oder Nylon, bestehen.

7. Anordnung (1) nach einem der vorhergehenden Ansprüche, wobei der Eckbodenteil (8) einen Rand (22) aufweist, der sich entlang etwa der Hälfte des Umfangsabschnitts des Eckbodenteils (8) erstreckt.

8. Anordnung (1) nach Anspruch 7, wobei sich der Rand (22) bogenförmig entlang dem Eckbodenteil (8) auf einem erhöhten Niveau von einem primär flachen Aufnahmeabschnitt (23) desselben sowie von einem unteren Niveau (25) an jeweiligen Endabschnitten (9, 10) des Eckbodenteils (8) erstreckt.

## Revendications

1. Ensemble (1) pour fixer des roulettes de valise (2), des skis et d'autres aides au transport d'une valise (3) agissant contre un sol, ledit ensemble (1) comprenant :
un adaptateur (6) étant formé d'un support séparé (7), ledit adaptateur (6) comportant des moyens d'accouplement (50), lesdits moyens d'accouplement (50) pouvant coopérer avec des éléments d'accouplement supplémentaires (52) situés sur un support de roulette (51) pour un boîtier de roulette (4) ou un autre support pour un autre aide au transport ; et
une partie inférieure de coin séparée ou intégrée (8) de ladite valise (3), ledit adaptateur (6) étant agencé de manière à pouvoir être reçu dans ladite partie inférieure de coin (8) et / ou être relié à celle-ci,
dans lequel l'adaptateur (6) présente une pluralité de chevilles (12) faisant saillie perpendiculairement à partir de la partie supérieure (15) de celui-ci qui peuvent être reçues dans des ouvertures (11) de la partie inférieure de coin (8), et
lesdites chevilles (12) formant des récepteurs pour des vis de fixation (18), et
la partie inférieure de coin (8) comprenant en outre des pieds cylindriques (13) étant agencés pour entourer les chevilles (12) depuis l'intérieur (3B) de la valise et être fixés par vis de fixation (18) dans l'adaptateur (6),
**caractérisé en ce que**
le boîtier de roulette (4) est agencé pour être fixé à l'ensemble (1) par une vis (19) de l'intérieur (3B) de la valise (3) par l'intermédiaire de trous de réception (54, 55) dans la partie inférieure de coin (8) et l'adaptateur (6) ainsi que par l'intermédiaire d'un trou de réception de vis (56) dans une douille (57) du boîtier de roulette (4).

2. Ensemble (1) selon la revendication 1, dans lequel les moyens de couplage (50) de l'adaptateur (6) et les éléments de couplage (52) du support de roulette (51) sont formés en tant que rainures appariées, essentiellement parallèles (28, 29) situées à des distances mutuelles (A, B) l'une de l'autre.

3. Ensemble (1) selon la revendication 1, dans lequel l'adaptateur (6) peut être reçu avec sa partie principale dans un évidement congruent (53) de la partie inférieure de coin (8).

4. Ensemble (1) selon l'une quelconque des revendications précédentes, dans lequel la partie inférieure de coin (8) est formée d'une pièce distincte ou consiste en une partie de coin intégrée (3A) de ladite valise (3).

5. Ensemble (1) selon la revendication 1, dans lequel les ouvertures (11) sont situées à distance mutuelle les unes des autres, le long de la circonférence respectivement de la partie inférieure de coin (8) et de l'adaptateur (6).

6. Ensemble (1) selon l'une quelconque des revendications précédentes, dans lequel le boîtier de roulette (4), le support (7) la partie inférieure de coin (8) de l'ensemble (1) sont constitués d'un matériau plastique, tel que polypropylène, ABS, et / ou nylon.

7. Ensemble (1) selon l'une quelconque des revendications précédentes, dans lequel la partie inférieure de coin (8) présente une bordure (22) qui s'étend le long d'environ la moitié de la partie circonférentielle de la partie inférieure de coin (8).

8. Ensemble (1) selon la revendication 7, dans lequel la bordure (22) s'étend de manière arquée le long de la partie inférieure de coin (8) à un niveau élevé à partir d'une partie de réception principalement plate (23) de celle-ci ainsi qu'à partir d'un niveau inférieur (25) au niveau de parties d'extrémité respectives (9, 10) de la partie inférieure de coin (8).
